# DEMANDE DE BREVET EUROPEEN

(11) **EP 2 011 725 A1**
(43) Date de publication de la demande: **07.01.2009**
(21) Numéro de dépôt: 07380202.7
(22) Date de dépôt: 06.07.2007
(51) Int. Cl.: B62J 9/00

(54) **Mécanisme de fermeture et de fication pour valises et malles de motocyclettes et similaires**

(71) Demandeur: Luma Industrias, S.A., 20120 Hernani (Guipúzcoa) (ES)
(72) Inventeur: Muerza Munilla, Alfredo, 20011 San Sebastian (Guipúzcoa) (ES)
(74) Mandataire: Urizar Barandiaran, Miguel Angel

(57) **Abrégé**

Mécanisme de fermeture et fixation pour valises et malles de motocyclettes et similaires, en particulier pour des valises formées d'une cuvette inférieure (1) et d'un couvercle supérieur (2) s'articulant entre eux, avec un dispositif de fermeture (4) destiné à libérer ou à bloquer à volonté le mécanisme de fermeture (18) du couvercle supérieur (2) et le mécanisme de fixation (19) de la valise au châssis (7) de la motocyclette, etant le dispositif de fermeture (4) relié à une plaque (27) qui libère ou bloque le mécanisme de fermeture (18) du couvercle supérieur (2) et le mécanisme de fixation (19) de la valise au châssis (7) de la motocyclette sur laquelle cette valise prend appui et cette plaque (27) reliée au dispositif de fermeture (4) présente deux états possibles en fonction de l'état du dispositif de fermeture (4) bloquée et débloqué.

## Description

### Champ d'application de l'invention

La présente invention se rapporte à un mécanisme de fermeture et fixation pour valises et malles de motocyclettes et similaires, qui assure la fermeture de la valise, aussi bien quand cette valise est fixée à la motocyclette que quand elle ne l'est pas, tout en empêchant la séparation de la valise de la motocyclette, lorsque le mécanisme de fermeture et de fixation se trouve dans une position de blocage.

### État antérieur de la technique

Les problèmes les plus importants que présentent, à l'heure actuelle, les valises pour motocyclettes et similaires reposent sur deux aspects: d'une part, éviter le vol des valises ou des objets qui s'y trouvent, et de l'autre, doter la valise d'un système simple d'ouverture et de fixation qui soit, en même temps, sûr pour l'utilisateur qui en possède la clé.

En ce qui concerne ces aspects, différents types de dispositifs et de mécanismes de fermeture et de fixation pour valises et malles de motocyclettes sont connus, qui ont pour but, d'une part, d'éviter la manipulation des objets se trouvant à l'intérieur de ces valises et, de l'autre, de transporter ces objets d'une manière sûre sur la motocyclette ou en dehors de cette dernière. Ces moyens de fermeture et de fixation permettent de séparer la valise de la motocyclette en la dotant d'un caractère polyvalent, ce qui permet l'utilisateur d'emporter la valise avec lui lorsqu'il marche ou lorsqu'il conduit la motocyclette.

Les différents dispositifs et mécanismes de fermeture et fixation existants se caractérisent par le fait que chacun d'entre eux possède un système concret de fermeture et fixation de la valise. Par exemple, le brevet d'invention espagnol ES 2226519 décrit un mécanisme destiné à la fixation et à la fermeture de valises comprenant une cuvette et un couvercle rigides articulés entre eux, avec une serrure incorporée à une plaque frontale oscillante et actionnable à la main, la serrure étant dotée, au moins, un pêne, qui bloque un dispositif de fermeture et d'ouverture du couvercle.

Le mécanisme de fermeture et fixation du brevet espagnol ES 2126438 comprend une cuvette et un couvercle rigides articulés entre eux, avec une serrure unique incorporée à une plaque frontale oscillante et actionnable à la main. La serrure est dotée de deux pênes qui se déplaçent entre eux, l'un d'entre eux immobilisant la plaque frontale mentionnée et l'autre bloquant un dispositif de retenue du couvercle.

Le brevet européen EP 0709282 décrit un mécanisme de sûreté et de fermeture de valises pour motocyclettes et similaires, qui comprend une serrure destinée à bloquer ou à libérer, d'une part, le mouvement d'une poignée pliable qui, dans son mouvement, libère un crochet qui bloque le couvercle et, de l'autre, le mouvement d'une plaque à laquelle est intégrée la serrure et qui, dans son mouvement, débloque le système de fixation.

Le brevet étasunien US 6481605 décrit un coffre de transport de motocyclette séparable, qui comprend une cuvette inférieure et un couvercle supérieur articulés entre eux. Le mécanisme de fermeture est destiné à bloquer le couvercle supérieur sur la cuvette inférieure et peut adopter un état de déblocage dans lequel les moyens de fixation libèrent la poignée de la position pliée et, par son intermédiaire, le couvercle. De la sorte, la poignée ne peut pas se mettre, de façon involontaire, dans la position de sortie et une personne non autorisée ne peut pas non plus la faire bouger.

L'invention européenne EP 1210260 a trait à une valise pour motocyclettes ou similaires munie d'un mécanisme de fermeture comportant deux leviers en forme de "L". Les deux leviers comprennent, à une extrémité, des crochets qui mettent la valise en rapport avec la base de support de la motocyclette et avec un élément du couvercle supérieur, et, à l'autre extrémité, des moyens élastiques en contact avec un levier intégré dans le mécanisme de fermeture. Ce levier tourne à partir de la position centrale correspondant à l'état de fermeture et blocage de la valise, vers deux positions opposées, qui peuvent ouvrir le couvercle supérieur de la valise ou fiare sortir la valise de la plaque support de la motocyclette.

Dans les grandes lignes, les mécanismes de fermeture et de fixation décrits, ainsi que d'autres mécanismes connus auparavant, peuvent être un peu incommodes au moment d'ouvrir le couvercle supérieur, car, dans la plupart des cas, la serrure se trouve dans la partie inférieure de la cuvette.

### Explication de l'invention

Le but du mécanisme de fermeture et de fixation de la présente invention est de résoudre les inconvénients que présentent les dispositifs connus dans la technique, en dotant la valise d'un mécanisme de fermeture simple et, en même temps, sûr, et en fournissant, de surcroît, d'autres avantages qui sont décrits ci-dessous.

Le mécanisme de fermeture et fixation de la présente invention est approprié pour les valises et les malles de motocyclettes et similaires comprenant une cuvette inférieure (1) et un couvercle supérieur (2) articulés entre eux grâce à un mécanisme tournant (5) situé sur les côtés de la valise. La cuvette inférieure (1) et le couvercle supérieur (2) constituent une enceinte intérieure dans le but de garder et de transporter des objets à l'intérieur de ladite enceinte, sans danger pour la conduite de la motocyclette ni l'intégrité de ces objets.

L'invention se caractérise par le fait que le mécanisme de fermeture et fixation de la présente invention comprend un premier dispositif de fermeture supérieure (4) intégré dans une plaque supérieure interchangeable (3) et un second dispositif de fermeture latérale (6) intégré dans le mécanisme tournant (5) latéral. Le dispositif de fermeture latérale (6), qui comprend les états de blocage et déblocage, agit sur le mécanisme tournant (5) en empêchant ou en permettant, respectivement, la rotation du couvercle (2) par rapport à son axe de rotation et à la cuvette rigide (1). Le dispositif de fermeture supérieure (4) libère ou bloque le mouvement d'une plaque (27) qui libère ou bloque, à son tour, le mécanisme de fermeture (18) du couvercle supérieur (2) et le mécanisme de fixation (19) de la valise au châssis (7) de la motocyclette sur laquelle cette valise prend appui.

Le mécanisme de fermeture (18) du couvercle supérieur (2) comprend un bouton-poussoir (10) relié à la plaque (27) et s'articulant avec la plaque supérieure interchangeable (3), laquelle s'articule avec une bielle (17) qui, à son tour, s'articule avec une autre bielle (16) reliée à une pièce fixe (15) solidaire de la cuvette (1). La plaque supérieure interchangeable (3) possède, à son extrémité libre, un bossage en guise de crochet (21) relié à une saillie (20) de la pièce de fermeture (11) solidaire du couvercle supérieur (2). L'assemblage entre le bossage en guise de crochet (21) de la plaque supérieur interchangeable (3) et la formation saillante (20) de la pièce de fermeture (11) solidaire du couvercle supérieur (2) est destiné à bloquer ce couvercle en position de fermeture. Lorsque le dispositif de fermeture supérieur (4) est débloqué, la plaque (27) reliée à ce dispositif de fermeture (4) peut se déplacer longitudinalement permettant ainsi le mouvement du bouton-poussoir (10), qui exécute l'action de déblocage du couvercle (2) et que, dans le cas contraire, il serait totalement bloqué et ne pourrait pas être déplacé.

Le mécanisme de fixation (19) de la valise au châssis (7) comprend un bouton-poussoir (12) relié à la plaque (27) et s'articulant avec la pièce fixe (15); ce bouton-poussoir (12) est, à son tour, relié au moyen d'un câble (29) à la plaque de fixation (25) qui, dans son mouvement, libère la dent de fixation (8) qui fait saillie solidairement avec le châsis (7), cette dent (8) demeurant introduit dans la valise, lorsque celle-ci est appuyée sur le châssis (7). Lorsque le dispositif de fermeture supérieure (4) est bloqué, la plaque (27) voit son déplacement longitudinal restreint, ce qui empêche le mouvement du bouton-poussoir (12) qui ne peut pas être actionné et, par conséquent, la valise ne peut pas être séparée de la dent (8) du châssis (7).

La cuvette (1), dans sa position frontale, est munie d'une poignée (9) reliée à un ressort (13) qui la maintient dans sa position contre la cuvette (1), cette poignée (9) ayant pour but de saisir ou de transporter la valise, sans aucun type de rapport avec les mécanismes d'ouverture et de fixation de la valise.

Constituant un autre aspect de l'invention, le couvercle supérieur (2) de la valise et la cuvette (1) possèdent un dispositif de fixation interne ou téton, qui maintient le couvercle (2) dans une position relevée, après qu'on en a assuré l'ouverture, ce qui évite qu'il se referme du fait du poids de celle-ci. Ce dispositif a pour fin de faciliter la manipulation et le traitement des objets placés à l'intérieur de la valise. Le dispositif de fixation interne du couvercle (2) comprend, de chaque côté de la cuvette (1), un rebord (22) avec un bossage hémisphérique (23) et, de chaque côté du couvercle (2), deux creux (24). Dans ces deux creux (24), qui correspondent aux positions du couvercle (2) fermée et ouverte, vient se loger le bossage hémisphérique (23) du rebord (22) correspondant, suivant la position du couvercle (2), ouverte ou fermée.

### Explication des figures

Pour compléter l'explication sur l'invention et afin d'aider à une meilleure compréhension des caractéristiques de l'invention, une série de dessins ayant un caractère indicatif et non limitatif est jointe, à titre d'exemple de réalisation préférentielle de l'invention:
Figure 1.- Vue éclatée générale de la valise et du mécanisme de fermeture et fixation pour la réalisation préférentielle de la présente invention.
Figure 2.- Détail du mécanisme de fermeture de la réalisation préférentielle.
Figure 3.- Détail du mécanisme de rotation du dispositif de fermeture latérale.

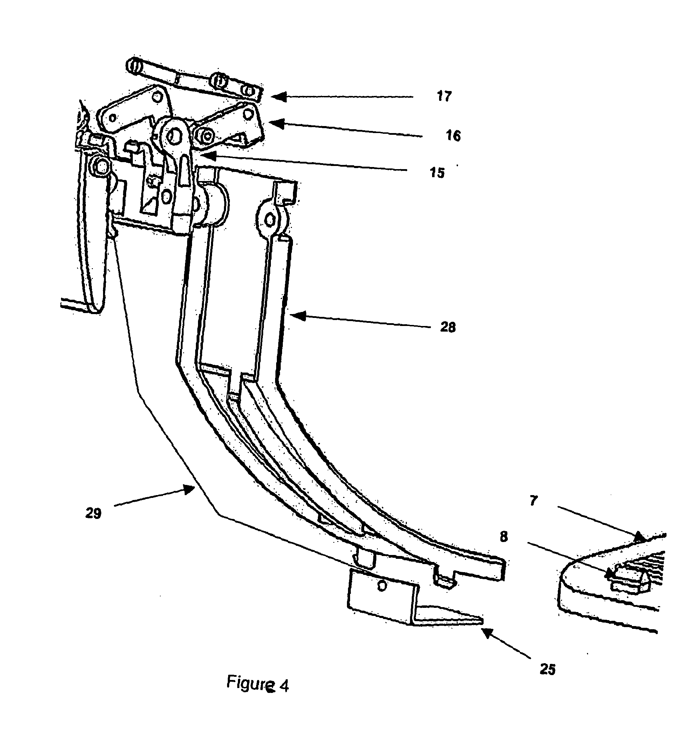

Figure 4.- Détail du mécanisme de fixation pour la réalisation préférentielle de la présente invention.
Figure 5.- Détail frontal du dispositif de fermeture supérieure type combinaison numérique.
Figure 6.- Détail inférieur du dispositif de fermeture supérieure type combinaison numérique.
Figure 7.- Détail du bouton-poussoir du mécanisme de fermeture du couvercle supérieur.
Figure 8.- Détail du bouton-poussoir du mécanisme de fixation de la valise au châssis.
Figure 9.- Vue éclatée du dispositif de fermeture supérieure type clé.
Figure 10.- Détail du dispositif de fermeture supérieure type clé.

### Présentation d'une réalisation préférentielle

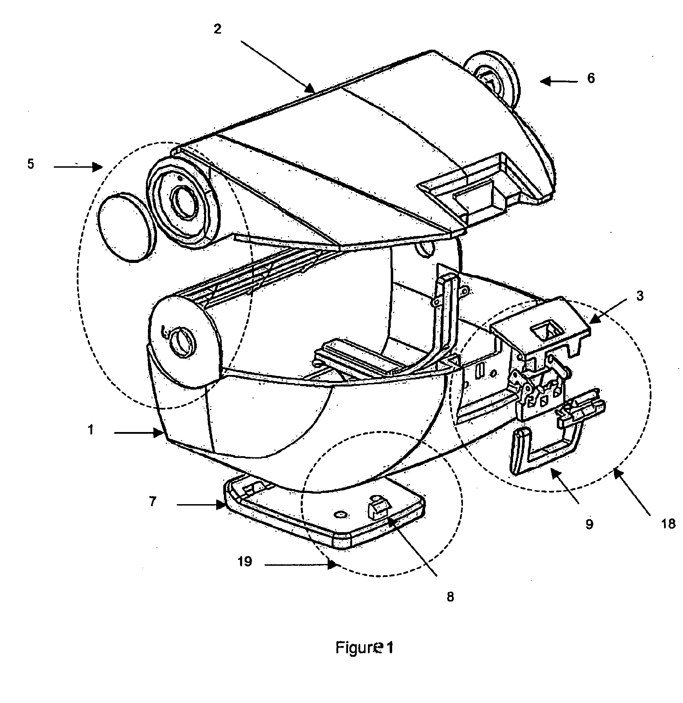

Sur la figure 1, on représente, d'une façon générale, la valise et le mécanisme de fermeture et fixation de la présente invention. Ce mécanisme de fermeture est destiné à des valises unies à une base-support de motocyclettes et similaires, qui comprennent une cuvette rigide (1) et un couvercle supérieur (2) s'articulant avec cette cuvette (1) grâce à un mécanisme de rotation (5) situé sur le côté de la valise. La valise présente une poignée rigide (9) unie à la cuvette (1) dans uen cavité de la partie frontale de ladite cuvette (1) où elle demeure logée grâce à l'action d'un ressort (13) qui la maintient collée contre la cuvette (1).

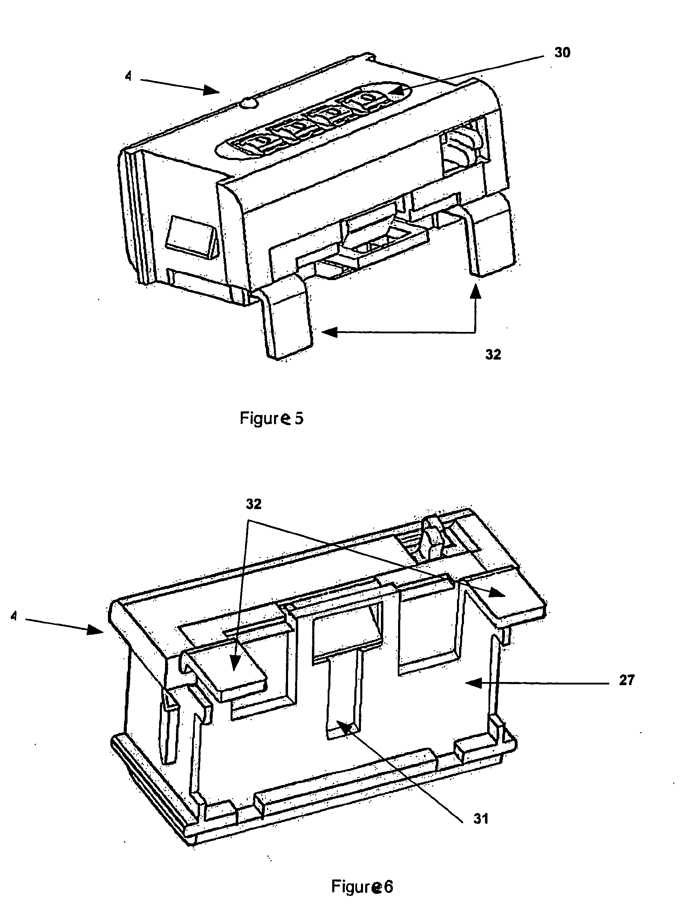

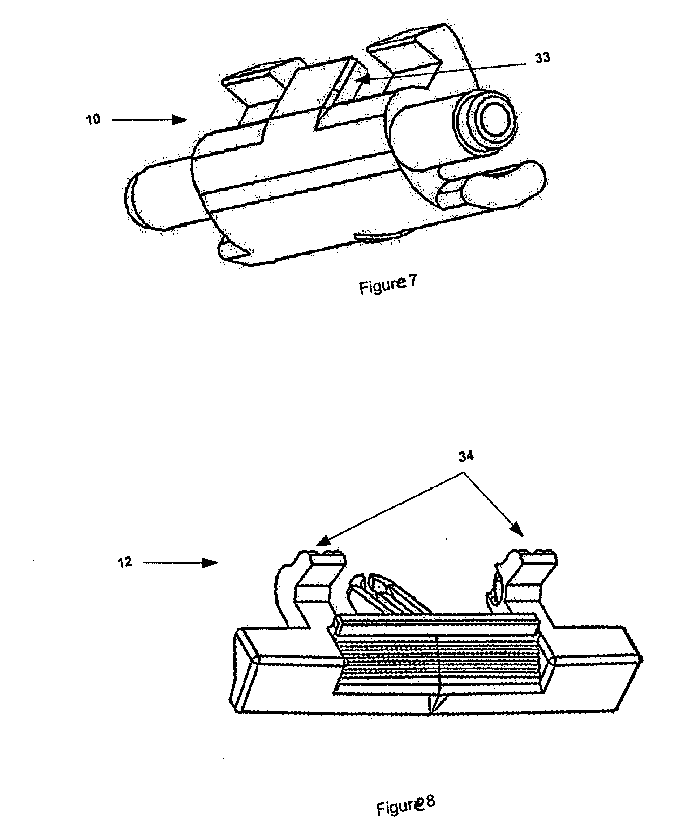

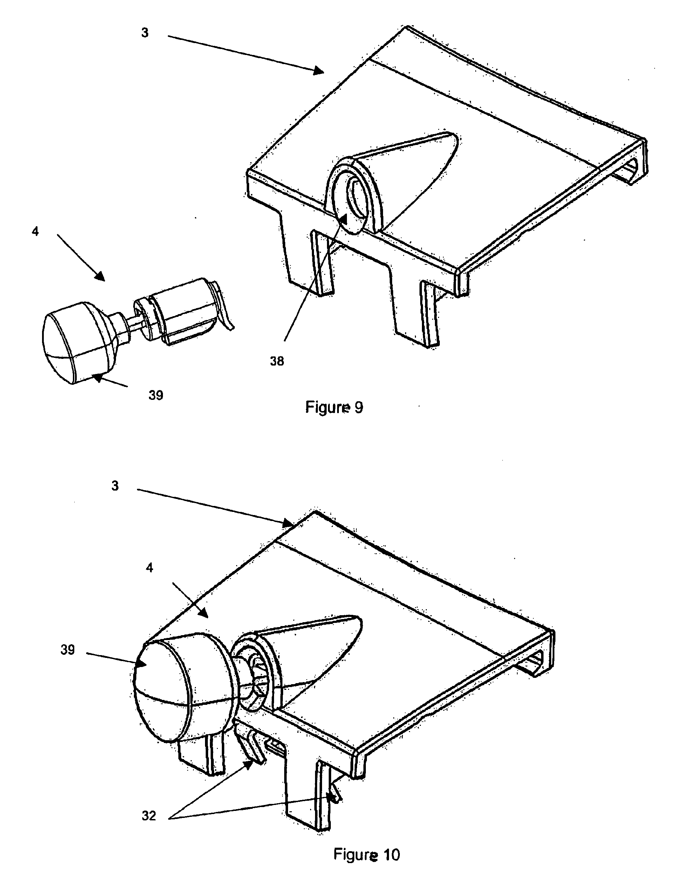

Dans la réalisation préférentielle de la présente invention, le mécanisme de fermeture et fixation présente, d'une part, un dispositif de fermeture supérieure (4) qui peut être du type combinaison numérique, comme on peut le constater sur les figures 1 et 5, ou du type clé, comme on le montre sur les figures 8 et 9 et, de l'autre, un dispositif de fermeture latérale (6), optionnel, qui peut être du type clé conventionnelle.

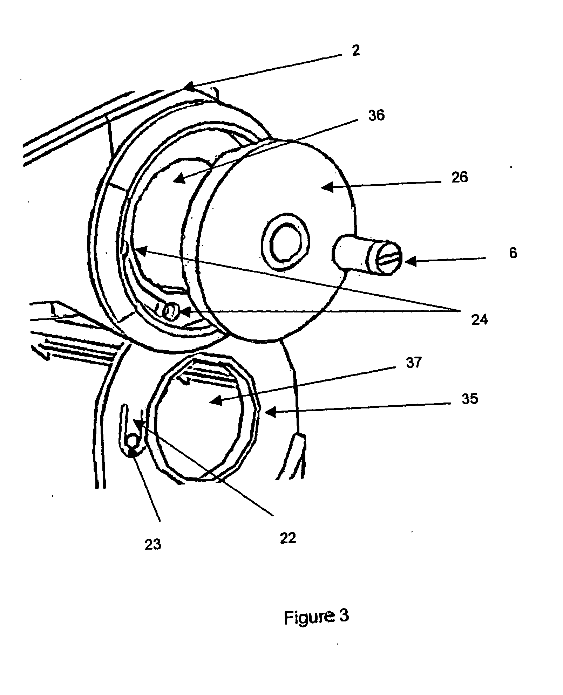

Le dispositif de fermeture latérale (6) apparaissant sur la figure 3, se loge à l'intérieur du mécanisme tournant latéral (5). Ce dispositif de fermeture (6) n'exécute pas lui-même l'ouverture du couvercle supérieur (2) de la valise. Sa mission est de doter la valise d'une plus grande sûreté face aux vols grâce à ses deux états de blocage de rotation ou déblocage de rotation. On peut également apprécier, sur la figure 3, le couvercle circulaire (26) qui recouvre le mécanisme tournant (5) de la valise.

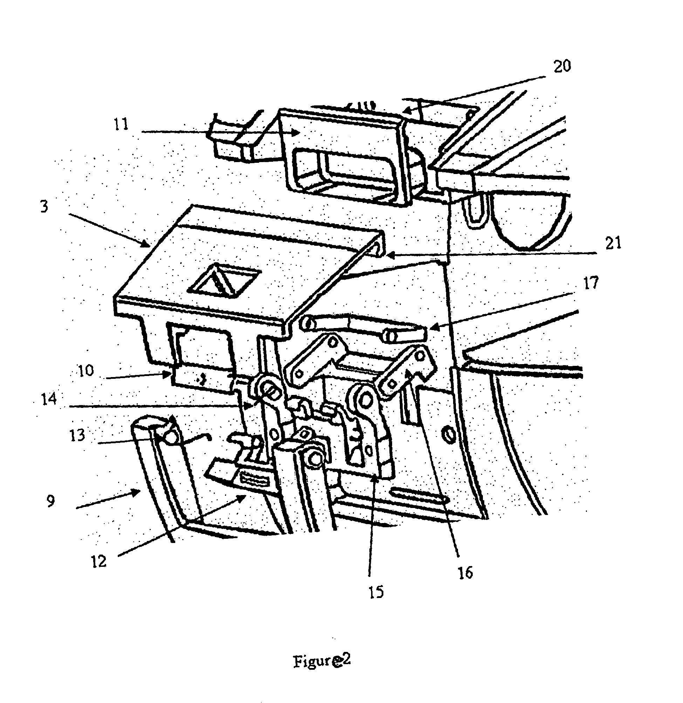

Le dispositif de fermeture supérieure (4) s'intègre dans une plaque supérieure (3), qui peut être remplacée en fonction du type de dispositif de fermeture supérieure (4) que l'on souhaite installer, un type combinaison numérique ou un type clé. Les figures 1 et 2 correspondent au dispositif de fermeture supérieure (4) type combinaison numérique, alors que les figures 8 et 9 correspondent au dispositif de fermeture supérieure (4) du type clé.

La figure 5 montre en détail le dispositif de fermeture supérieure (4) du type combinaison, dont les chiffres numériques (30) peuvent comporter un matériel luminescent, un matériel transparent doté de leds qui s'allument par simpl contact, ou tout autre matériel, qui peut disposer ou pas, de leds qui s'allument pendant une durée préétablie à partir du moment où on les active.

Les figures 8 et 9 montrent le dispositif de fermeture supérieure (4) du type clé, qui se loge dans la plaque supérieure (3) au moyen d'un orifice (38) pratiqué dans cette plaque.

La plaque supérieure (3) est reliée à un dispositif de retenue sur un bossage (20) d'une pièce de fermeture (11) solidaire du couvercle supérieur (2). La plaque supérieure (3) s'articule avec la cuvette (1) au moyen d'une bielle (17) qui, à son tour, s'articule avec une autre bielle (16) reliée à une pièce fixe (15) solidaire de la cuvette (1), comme on peut l'observer sur la figure 2.

D'autre part, le dispositif de fermeture (4) dispose d'une plaque (27), comme on peut l'apprécier sur les figures 5 et 6. Cette plaque (27) est reliée au mécanisme de fermeture (18) et au mécanisme de fixation (19) au moyen de deux boutons-poussoirs (10, 12) respectivement.

Le bouton-poussoir (10) du mécanisme de fermeture (18) s'articule avec la plaque supérieure (3) et il est relié à deux saillies en forme de crochets de la pièce fixe (15) solidaire de la cuvette (1). Le bouton-poussoir (12) du mécanisme de fixation (19) s'articule avec la pièce fixe (15) et il est relié, au moyen d'un câble (29), à un dispositif de retenue entre une plaque (25) et une dent (8) qui fait saillie solidairement du châssis (7). Cette dent (8) est introduite dans la valise, lorsque cette dernière prend appui sur le châssis (7).

Dans la position de blocage du dispositif de fermeture supérieure (4), le mouvement des deux boutons-poussoirs (10, 12) est limité par la plaque (27) mentionnée, qui ne permet le mouvement des boutons-poussoirs (10, 12) que lorsque le dispositif de fermeture (4) est dans la position de déblocage et permet le mouvement de cette plaque (27).

Pour effectuer l'opération d'ouverture du couvercle (2), on peut se trouver face à deux situations différentes, en fonction du dispositif de fermeture latérale (6). Dans le cas où le dispositif de fermeture latérale (6) serait débloqué ou ne serait pas installé sur la valise, il faudrait uniquement débloquer le dispositif de fermeture supérieure (4). Dans le cas où le dispositif de fermeture latérale (6) aurait été installé sur la valise et qu'il serait bloqué, pour effectuer l'ouverture du couvercle (2), il faudrait débloquer, d'une part, ce dispositif de fermeture latérale (6) au moyen de la clé correspondante et, de l'autre, le dispositif de fermeture supérieur (4) au moyen de la combinaison correcte ou en tournant la clé (39). Une fois que les deux dispositifs de fermeture sont débloqués, il faut actionner le bouton-poussoir (10) du mécanisme de fermeture (18) verticalement et dans un sens ascendant, ce bouton-poussoir étant alors libéré des deux bossages de la pièce fixe (15) et ainsi la plaque supérieure (3) est sans lien avec la pièce (11) et, par conséquent, du couvercle supérieur (2). La plaque supérieure (3) étant libre, un ressort (14) projette automatiquement cette plaque (3) jusqu'à une position saillante vers l'arrière.

Pour effectuer l'opération de séparation de la valise du châssis (7), il faut débloquer le dispositif de fermeture supérieure (4), au moyen de la combinaison correcte ou en tournant la clé (39). Dans l'état de déblocage du dispositif de fermeture (4), le bouton-poussoir (12) doit être actionné verticalement et dans un sens ascendant en tendant un câble (29) dont le mouvement provoque le déplacement d'une plaque de retenue (25) reliée à la dent (8) solidaire du châssis (7), la dent (8) est alors libérée de la valise. De cette manière, la valise peut être séparée du châssis (7). Le bouton-poussoir (12) revient à sa position grâce à un ressort relié à la plaque de retenue (25), qui tend à maintenir cette plaque dans la position de retenue de la dent (8) en entraînant le câble (29) et avec lui, le bouton-poussoir (12) à la position initiale.

Pour encastrer la valise dans le châssis (7), il faut placer la valise sur le châssis (7) et exercer une légère pression pour que la dent (8) du châssis (7) s'introduise dans la valise et soit retenue par la plaque (25).

## Revendications

1. Mécanisme de fermeture et fixation pour valises et malles de motocyclettes et similaires, en particulier pour des valises formées d'une cuvette inférieure (1) et d'un couvercle supérieur (2) s'articulant entre eux, avec un dispositif de fermeture (4) destiné à libérer ou à bloquer à volonté le mécanisme de fermeture (18) du couvercle supérieur (2) et le mécanisme de fixation (19) de la valise au châssis (7) de la motocyclette, ce dispositif de fermeture (4) étant situé dans la partie supérieure de la valise, incorporé dans une plaque supérieure (3) qui s'articule avec la cuvette inférieure (1) et relié à une formation saillante (20) d'une pièce (11) solidaire du couvercle supérieur (2), **se caractérisant par le fait que** que le dispositif de fermeture (4) est relié à une plaque (27) qui libère ou bloque le mécanisme de fermeture (18) du couvercle supérieur (2) et le mécanisme de fixation (19) de la valise au châssis (7) de la motocyclette sur laquelle cette valise prend appui ; cette plaque (27) reliée au dispositif de fermeture (4) présente deux états possibles en fonction de l'état du dispositif de fermeture (4): premièrement bloquée, lorsque son mouvement est restreint, qui correspond au dispositif de fermeture (4) bloqué et deuxièmement, débloquée, lorsqu'elle peut se déplacer, qui correspond au dispositif de fermeture (4) débloqué.

2. Mécanisme de fermeture et de fixation pour valises et malles de motocyclettes et similaires, selon la revendication 1, **se caractérisant par le fait que** le mécanisme de fermeture (18) du couvercle supérieur (2) et le mécanisme de fixation (19) de la valise au châssis (7) de la motocyclette sont contrôlés par deux boutons-poussoirs (10, 12) qui doivent être actionnés dans un sens ascendant et descendant pour exécuter les actions d'ouverture du couvercle et de séparation de la valise du châssis, respectivement.

3. Mécanisme de fermeture et de fixation pour valises et malles de motocyclettes et similaires, selon la revendication 1, **se caractérisant par le fait que** la plaque (27) reliée au dispositif de fermeture (4) possède un orifice (31) relié à une formation saillante (33) du bouton-poussoir (10) du mécanisme de fermeture (18) du couvercle (2), et deux bossages (32) reliés à deux formations saillantes (34) du bouton-poussoir (12) du mécanisme de fixation (19) de la valise au châssis (7) de la motocyclette.

4. Mécanisme de fermeture et de fixation pour valises et malles de motocyclettes et similaires, selon la revendication 1, **se caractérisant par le fait que** la plaque supérieure (3) est interchangeable en fonction du type de dispositif de fermeture (4) employé.

5. Mécanisme de fermeture et de fixation pour valises et malles de motocyclettes et similaires, selon la revendication 1, **se caractérisant par le fait que** le dispositif de fermeture (4) peut être de deux types : dispositif de fermeture du type combinaison numérique ou du type clé.

6. Mécanisme de fermeture et de fixation pour valises et malles de motocyclettes et similaires, selon la revendication 5, **se caractérisant par le fait que** le dispositif de fermeture (4) du type combinaison numérique comprend des chiffres numériques, qui peuvent être auto-éclairables, réalisés avec un matériel fluorescent, ou qui peuvent également s'allumer pendant une période de temps au moment d'être manipulés, afin d'en faciliter l'utilisation et la lecture dans des milieux ayant une faible luminosité.

7. Mécanisme de fermeture et de fixation pour valises et malles de motocyclettes et similaires, en particulier pour des valises formées d'une cuvette inférieure (1) et d'un couvercle supérieur (2) s'articulant entre eux, avec un dispositif de fermeture (4) destiné à débloquer ou à bloquer à volonté le mécanisme de fermeture (18) du couvercle supérieur (2) et le mécanisme de fixation (19) de la valise au châssis (7) de la motocyclette, ce dispositif de fermeture (4) étant situé dans la partie supérieure de la valise, incorporé dans une plaque supérieure (3) s'articulant avec la cuvette inférieure (1) et reliée à une formation saillante (20) d'une pièce (11) solidaire du couvercle supérieur (2), **se caractérisant par le fait que** l'articulation entre le couvercle supérieur (2) amovible et la cuvette inférieure (1) fixée au châssis (7) de la motocyclette, est située sur les côtés de la valise (5), celle-ci comprenant un assemblage tournant de chaque côté de la cuvette (1), un bossage circulaire (35) et un orifice (37), et, de chaque côté du couvercle supérieur (2), un orifice circulaire (36) relié au bossage de la cuvette et un couvercle circulaire (26) qui sert d'axe de rotation, recouvre et protège l'assemblage tournant.

8. Mécanisme de fermeture et de fixation pour valises et malles de motocyclettes et similaires, selon la revendication 5, **se caractérisant par le fait que** le mécanisme tournant (5) peut abriter, à l'intérieur, un second dispositif de fermeture (6), qui bloque ou débloque la rotation du couvercle supérieur (2).

9. Mécanisme de fermeture et de fixation pour valises et malles de motocyclettes et similaires, selon la revendication 5, **se caractérisant par le fait que** le mécanisme tournant (5) possède un dispositif de fixation qui maintient le couvercle supérieur (2) relevé dans sa position d'ouverture maximale, ce dispositif de fixation comprenant un rebord (22) avec un bossage ou téton (23) sur chaque côté de la cuvette (1) qui s'emboîte dans une cavité spéciale (24) du couvercle supérieur (2), quand il est dans sa position d'ouverture maximale.

## Revendications modifiées

### Revendications modifiées conformément à la règle 137(2) CBE.

**1.** Mécanisme de fermeture et fixation pour valises et malles de motocyclettes et similaires, en particulier pour des valises formées d'une cuvette inférieure (1) et d'un couvercle supérieur (2) s'articulant entre eux, avec un dispositif de fermeture (4) destiné à libérer ou à bloquer à volonté le mécanisme de fermeture (18) du couvercle supérieur (2) et le mécanisme de fixation (19) de la valise au châssis (7) de la motocyclette, ce dispositif de fermeture (4) étant situé dans la partie supérieure de la valise, incorporé dans une plaque supérieure (3) qui s'articule avec la cuvette inférieure (1) et relié à une formation saillante (20) d'une pièce (11) solidaire du couvercle supérieur (2), **se caractérisant par le fait que**:
a) la plaque supérieure (3) est interchangeable en fonction du type de dispositif de fermeture (4) employé;
b) le dispositif de fermeture (4) est relié à une plaque (27) qui peut se déplacer longitudinalement, à la quelle libère ou bloque;
c) la plaque (27) libère ou bloque le mécanisme de fermeture (18) du couvercle supérieur (2) et le mécanisme de fixation (19) de la valise au châssis (7) de la motocyclette sur laquelle cette valise prend appui ; cette plaque (27) reliée au dispositif de fermeture (4) présente deux états possibles en fonction de l'état du dispositif de fermeture (4): premièrement bloquée, lorsque son mouvement est restreint, qui correspond au dispositif de fermeture (4) bloqué et deuxièmement, débloquée, lorsqu'elle peut se déplacer, qui correspond au dispositif de fermeture (4) débloqué.

**2.** Mécanisme de fermeture et de fixation pour valises et malles de motocyclettes et similaires, selon la revendication 1, **se caractérisant par le fait que** le mécanisme de fermeture (18) du couvercle supérieur (2) et le mécanisme de fixation (19) de la valise au châssis (7) de la motocyclette sont contrôlés par deux boutons-poussoirs (10, 12) qui doivent être actionnés dans un sens ascendant et descendant pour exécuter les actions d'ouverture du couvercle et de séparation de la valise du châssis, respectivement.

**3.** Mécanisme de fermeture et de fixation pour valises et malles de motocyclettes et similaires, selon la revendication 1, **se caractérisant par le fait que** la plaque (27) reliée au dispositif de fermeture (4) possède un orifice (31) relié à une formation saillante (33) du bouton-poussoir (10) du mécanisme de fermeture (18) du couvercle (2), et deux bossages (32) reliés à deux formations saillantes (34) du bouton-poussoir (12) du mécanisme de fixation (19) de la valise au châssis (7) de la motocyclette.

**4.** Mécanisme de fermeture et de fixation pour valises et malles de motocyclettes et similaires, selon la revendication 1, **se caractérisant par le fait que** le dispositif de fermeture (4) peut être de deux types : dispositif de fermeture du type combinaison numérique ou du type clé.

**5.** Mécanisme de fermeture et de fixation pour valises et malles de motocyclettes et similaires, selon la revendication 4, **se caractérisant par le fait que** le dispositif de fermeture (4) du type combinaison numérique comprend des chiffres numériques, qui peuvent être auto-éclairables, réalisés avec un matériel fluorescent, ou qui peuvent également s'allumer pendant une période de temps au moment d'être manipulés, afin d'en faciliter l'utilisation et la lecture dans des milieux ayant une faible luminosité.

**6.** Mécanisme de fermeture et de fixation pour valises et malles de motocyclettes et similaires, en particulier pour des valises formées d'une cuvette inférieure (1) et d'un couvercle supérieur (2) s'articulant entre eux, avec un dispositif de fermeture (4) destiné à débloquer ou à bloquer à volonté le mécanisme de fermeture (18) du couvercle supérieur (2) et le mécanisme de fixation (19) de la valise au châssis (7) de la motocyclette, ce dispositif de fermeture (4) étant situé dans la partie supérieure de la valise, incorporé dans une plaque supérieure (3) s'articulant avec la cuvette inférieure (1) et reliée à une formation saillante (20) d'une pièce (11) solidaire du couvercle supérieur (2), **se caractérisant par le fait que** l'articulation entre le couvercle supérieur (2) amovible et la cuvette inférieure (1) fixée au châssis (7) de la motocyclette, est située sur les côtés de la valise (5), celle-ci comprenant un assemblage tournant de chaque côté de la cuvette (1), un bossage circulaire (35) et un orifice (37), et, de chaque côté du couvercle supérieur (2), un orifice circulaire (36) relié au bossage de la cuvette et un couvercle circulaire (26) qui sert d'axe de rotation, recouvre et protège l'assemblage tournant.

**7.** Mécanisme de fermeture et de fixation pour valises et malles de motocyclettes et similaires, selon la revendication 4, **se caractérisant par le fait que** le mécanisme tournant (5) peut abriter, à l'intérieur, un second dispositif de fermeture (6), qui bloque ou débloque la rotation du couvercle supérieur (2).

**8.** Mécanisme de fermeture et de fixation pour valises et malles de motocyclettes et similaires, selon la revendication 4, **se caractérisant par le fait que** le mécanisme tournant (5) possède un dispositif de fixation qui maintient le couvercle supérieur (2) relevé dans sa position d'ouverture maximale, ce dispositif de fixation comprenant un rebord (22) avec un bossage ou téton (23) sur chaque côté de la cuvette (1) qui s'emboîte dans une cavité spéciale (24) du couvercle supérieur (2), quand il est dans sa position d'ouverture maximale.
